# EUROPEAN PATENT APPLICATION

(11) **EP 4 844 677 A1**
(43) Date of publication of application: **25.11.2026**
(21) Application number: 26180539.4
(22) Date of filing: 22.05.2026
(51) Int. Cl.: G06T 7/00

(54) **TRAINING METHOD TO DETECT ANOMALIES IN PROCESSED PANELS AND ASSOCIATED DETECTION METHOD**

(30) Priority: 23.05.2025 IT 202500011785
(71) Applicant: SCM Group S.p.A., 47921 Rimini (RN) (IT)
(72) Inventor: GESSI, Luca, 47921 RIMINI (RN) (IT); PIERETTI, Carlo, 47921 RIMINI (RN) (IT); MELONI, Paolo, 47921 RIMINI (RN) (IT); SCRUGLI, Matteo Antonio, 47921 RIMINI (RN) (IT); BUSIA, Paola, 47921 RIMINI (RN) (IT)
(74) Representative: Tiburzi, Andrea

(57) **Abstract**

The invention relates to a computer-implemented method for training a predictive model—an artificial neural network with an encoding and a decoding branch—to detect anomalies in worked panels. A plurality of images of worked panel sides is provided to the model together with binary labels indicating the presence of anomalies. The encoding branch generates reduced-size encoded images, which the decoding branch expands to reconstructed images of the original size. A discrepancy value between the input and reconstructed images is calculated and compared with a predetermined threshold. When the discrepancy exceeds the threshold, the value is back-propagated to adjust the model, and the input image is re-processed until the discrepancy falls below the threshold.

## Description

The present invention relates to a training method for the detection of anomalies in worked panels and an associated detection method.

The present invention also relates to a system for cutting panels into sectioned panels and for the detection of anomalies and/or for the processing (edging) of the narrow sides or edges of panels.

### Field of the invention

More specifically, the invention concerns a computer-implemented method to train a predictive model for the detection of anomalies in worked panels.

The invention further concerns a computer-implemented method for the detection of anomalies in worked panels by means of a pre-trained predictive model.

### Background

As is well known, sizing machines are widely used to cut panels into multiple parts along a predetermined cutting direction. These machines are equipped with cutting tools, such as circular saws, and a support surface consisting of a fixed portion and a mobile carriage. The carriage, for example, can move one or more panels made of materials such as wood, particle board, plywood, MDF, or aluminum toward the cutting tool along the cutting direction, allowing the panel to be divided into two parts with each operation.

A sizing machine generally comprises a first station for loading and unloading the pieces, a processing station, and a second loading/unloading or entry/exit station. The latter is equipped with a surface from which the worked pieces can be picked up by an operator or a mechanical arm.

The transfer of panels from the first station to the processing station occurs via a handling device, commonly called a "pusher". After the transfer, the panels are cut by a cutting unit that moves along the cutting direction, usually perpendicular to the plane on which the panels are arranged. Once cut, the pieces are unloaded at the first or second loading/unloading station, to be picked up or reinserted into the machine for further processing.

The cutting unit is equipped with a main rotating blade in its primary direction and, optionally, with a scoring blade that rotates in the opposite direction to ensure a more precise cut. Some machines can integrate a video camera or a scanner to acquire images of the just-cut side of the panel. These images are used to verify the quality of the cut. However, quality control is typically entrusted to an operator, who visually examines the images to detect any macroscopic anomalies/defects or manually touches the cut surface to detect microscopic anomalies/defects. Such microscopic defects can be generated by a cutting speed that is too high, pressure beam positioning that is too high, absent or not regularly performed adjustment of the scoring blade, or the anomalous presence of external material between the panels to be sectioned.

There is therefore a need for an automated, faster, and more precise verification method that reduces dependence on the operator and improves safety and efficiency for the detection of anomalies/defects.

### Aim of the invention

In light of the above, it is, therefore, a objective of the present invention to provide a computer-implemented method for training a predictive model for the detection of anomalies in worked panels, which overcomes the disadvantages of the known methods mentioned above.

Another objective of the invention is to provide a computer-implemented method for the detection of anomalies in worked panels by means of a trained predictive model that is faster and more accurate compared to the prior art.

Finally, an objective of the present invention is to provide a system for the processing of panels, for example for cutting wood panels into sectioned wood panels, or for example for the edging of panels, and for the detection of anomalies in such worked panels, for example after they have been sectioned or edged.

### Object of the invention

Therefore, a specific object of the present invention is a computer-implemented method for training a predictive model for the detection of anomalies in worked panels, said predictive model comprising an artificial neural network, comprising an encoding branch and a decoding branch, the method comprising the following steps:
A1) providing to said predictive model a plurality of input images of worked panels from a dataset, each input image comprising an image of a worked side face of a corresponding panel; for each of said plurality of input images:
B1) receiving a label indicating whether said input image includes at least one anomaly;
C1) generating, by using said encoding branch, at least one encoded image having reduced spatial dimensions with respect to said input image, wherein the step comprises extracting at least an initial feature map representative of said input image and projecting said at least one initial feature map into said at least one corresponding encoded image;
D1) generating, by using said decoding branch, a decoded image having spatial dimensions corresponding to said input image, wherein step D1 comprises generating an enriched feature map from said at least one encoded image and projecting said enriched feature map into said decoded image;
E1) determining a discrepancy value between said input image and said decoded image;
F1) comparing said discrepancy value with a predetermined threshold;
G1) in response to a determination that said discrepancy value reaches said predetermined threshold, propagating said discrepancy value or a difference between the determined discrepancy value and said predetermined threshold in said predictive model and providing again said input image to said predictive model so as to obtain a reduced discrepancy value.

Further according to the invention, said encoding branch and said decoding branch can form a convolutional or variational autoencoder.

Always according to the invention, said encoding branch and said decoding branch can have a complementary structure to each other.

Furthermore according to the invention, said encoding branch can comprise a first plurality of convolutional layers in series, each followed by a first activation layer, said first activation layer comprising a Rectified Linear Unit (ReLu) activation function.

Further according to the invention, said decoding branch can comprise a second plurality of convolutional layers in series, each followed by a second activation layer.

Always according to the invention, said second activation layer can comprise a sigmoid function for the last convolutional layer and a ReLu function for each remaining convolutional layer of said second plurality of convolutional layers, said second plurality of convolutional layers being transposed with respect to said first plurality of convolutional layers.

Furthermore according to the invention, one of said first plurality of convolutional layers can comprise a 3x3 kernel, configured to extract said initial feature map comprising a number of features between 32 and 64 from the input image.

Further according to the invention, said dataset can comprise input images free from anomalies and input images comprising at least one anomaly.

Always according to the invention, said discrepancy value can be calculated as mean squared error between said input image and said decoded image.

Furthermore according to the invention, said predetermined threshold, used to discriminate compliant input images II from defective ones, can be defined as: avg_loss + N*std_loss wherein: avg_loss is equivalent to the mean value of said discrepancy value; N is equivalent to an integer; and std_loss is equivalent to the standard deviation value of said discrepancy value.

Further according to the invention, said artificial neural network can be a convolutional neural network, CNN.

Furthermore, an object of the present invention is a computer-implemented method for the detection of anomalies in worked panels by means of a trained predictive model, said method comprising the following steps:
A2) providing to said predictive model an input image of worked panels, said input image comprising an image of a worked side face of a corresponding panel;
B2) generating, by using said encoding branch of said trained predictive model, at least one encoded image having reduced spatial dimensions with respect to said input image, wherein step B2 comprises extracting at least an initial feature map representative of said input image and projecting said at least one initial feature map into said at least one corresponding encoded image;
C2) generating, by using said decoding branch of said trained predictive model, a decoded image having spatial dimensions corresponding to said input image, wherein step C2 comprises generating an enriched feature map from said encoded image and projecting said enriched feature map into said decoded image;
D2) determining a discrepancy value between said input image and said decoded image;
E2) comparing said discrepancy value with a predetermined threshold;
F2) in response to a determination that said discrepancy value reaches said predetermined threshold, providing a signal indicating that said input image includes at least one anomaly; and
G2) in response to a determination that said discrepancy value does not reach said predetermined threshold, providing a signal indicating that said input image does not include at least one anomaly.

Furthermore, an object of the present invention is a system for cutting wood panels into sectioned wood panels and for the detection of anomalies in said sectioned panels, said system comprising: a machine tool comprising: a cutting unit for cutting said wood panels into sectioned wood panels, and at least one acquisition device for acquiring an input image of a sectioned wood panel; and at least one processor communicatively coupled to said at least one acquisition device and configured to perform the computer-implemented method for training a predictive model for the detection of anomalies in worked panels, object of the invention.

Furthermore, an object of the present invention is a system for the edging of wood panels into edged wood panels and for the detection of anomalies in said edged panels, said system comprising: a machine tool comprising: an edging unit for the edging of said wood panels into edged wood panels, and at least one acquisition device for acquiring an input image of an edged wood panel; and at least one processor communicatively coupled to said at least one acquisition device and configured to perform the computer-implemented method for training a predictive model for the detection of anomalies in worked panels, object of the invention.

Furthermore, an object of the present invention is a computer program product comprising instructions which, when the program is executed by a processor, cause the processor to perform the computer-implemented method for training a predictive model for the detection of anomalies in worked panels, object of the invention, or the method for detecting anomalies in worked panels, object of the invention.

Furthermore, an object of the present invention is a computer-readable medium on which the program product, object of the invention, is stored.

### Brief description of the figures

The present invention will now be described by way of illustration but not of limitation, according to its preferred embodiments, with particular reference to the figures of the accompanying drawings, wherein:
figure 1 shows a schematic of a system for cutting wood panels into sectioned wood panels, according to an embodiment object of the invention;
figure 2 shows a flowchart of the computer-implemented method for training a predictive model for the detection of anomalies in worked panels, according to an embodiment object of the invention;
figure 3 shows a flowchart of the computer-implemented method for the detection of anomalies in worked panels by means of the trained model as shown in the method of figure 2;
figure 4 shows a diagram of the artificial neural network used to perform the method of figure 2 or 3;
figure 5 shows an image of a sectioned wood panel acquired by an acquisition device of the system of figure 1;
figures 6 - 9 show input images of the method of figure 2.
figure 10 illustrates a block diagram of a computer-implemented method for training a predictive model for the detection of anomalies, according to a first non-claimed illustrative example.
figure 11 represents a flowchart of a computer-implemented method for training a predictive model for detecting anomalies in worked panels, according to a second non-claimed illustrative example.
figure 12 shows a flowchart of a method for detecting anomalies in worked panels, according to a third non-claimed illustrative example.

In the various figures, similar parts will be indicated with the same reference numerals.

### Detailed description

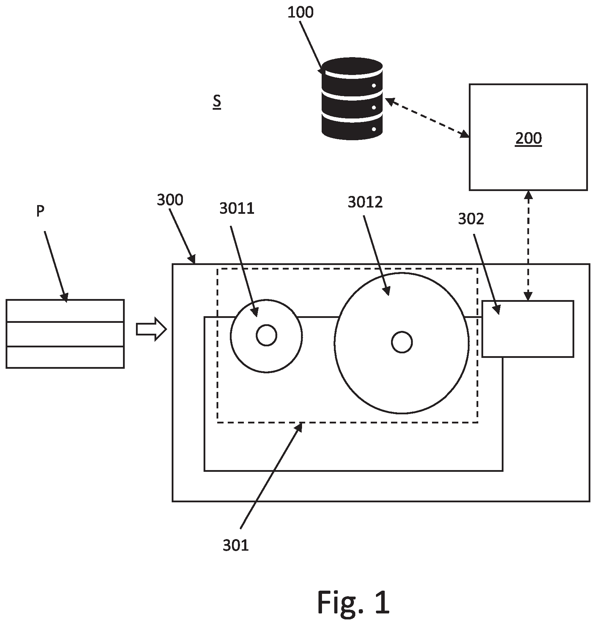

With reference to figure 1, a system S is shown for cutting panels of wood or other material, such as panels of particle board, plywood, MDF, or aluminum.

The system S allows for obtaining sectioned wood panels P and the detection of anomalies in the sectioned panels P.

In particular, the system S shown in figure 1 comprises a machine tool 300 such as, for example, a sizing machine used to cut panels into multiple parts along a predetermined cutting direction.

The machine tool 300 in turn comprises a cutting unit 301 for cutting the wood panels into sectioned panels P, such a cutting unit 301 can comprise one or more cutting tools such as, for example, circular saws, or band saws.
The cutting unit 301 in figure 1 can comprise a rotating blade 3012 in its main direction and, optionally, with a scoring blade 3011 that rotates in the opposite direction to ensure a more precise processing.

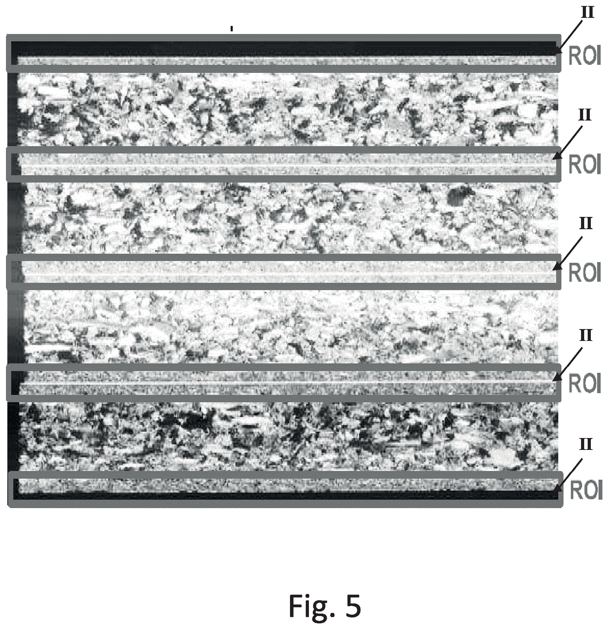

The machine tool 300 also comprises at least one acquisition device 302 for acquiring an input image II of a sectioned panel P, such as for example one or more cameras capable of acquiring images in the visible, UV, or infrared spectrum. The acquisition device 302 can comprise a video camera or a scanner to acquire images of the side of the just-cut panel, such as for example the image shown in figure 5. From the image in figure 5, images of the regions of interest (ROI) can be extracted, which will correspond to the input images II used to verify the quality of the cut.

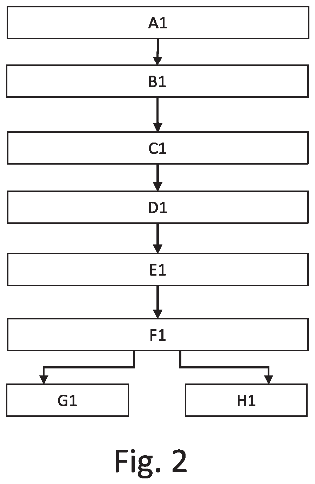

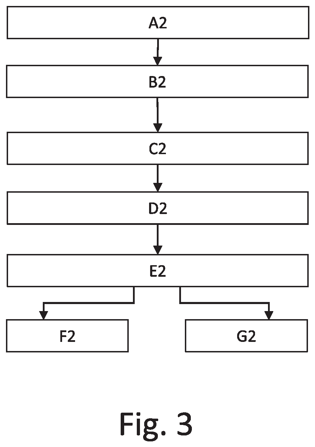

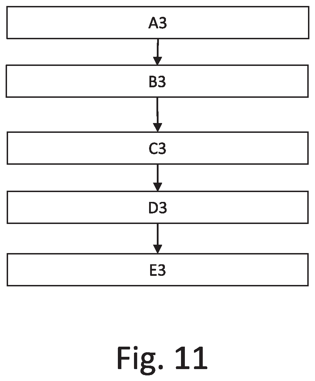

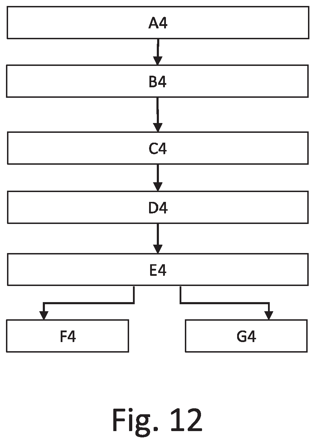

The machine tool 300 also comprises at least one processor 200, communicatively coupled to the acquisition device 302, and configured to perform the anomaly detection method, which will be described later with reference to figure 3 or figure 12, or the training method, which will be described later with reference to figure 2 or figure 11.

The processor 200 can be a processor suitable for the execution of a software product, including, by way of example, both general-purpose microprocessors and specialized microprocessors, and/or one or more processors of any type of digital computer.

Generally, the processor 200 is configured to receive/obtain instructions from a read-only memory (ROM), a random-access memory (RAM), an external/local memory or a combination thereof, and to execute the instructions to implement the method described below with reference to figures 2 and 3.

The input images II or output ID can be obtained/stored from/in a memory 100 or database, which can be external (for example, a remote server as illustrated in figure 1) or a local memory of the processor 200 itself.

The instructions can be part of a software product storable on a computer-readable storage medium, such as an internal or external memory or storage to the processor itself, for example on a remote server.

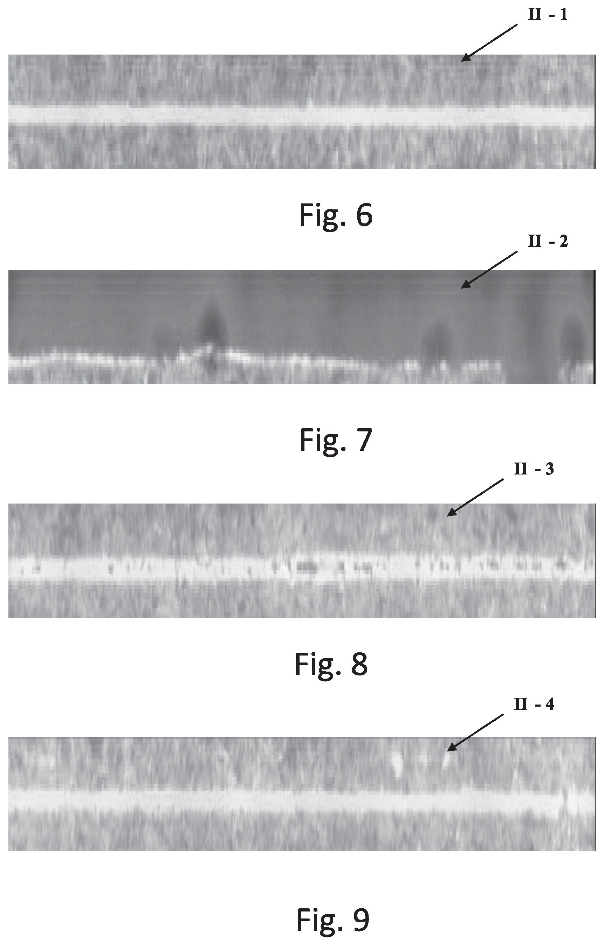

The machine 300 can also comprise a display screen (not shown in the figures) to display the input images II, for example, the images illustrated in figures 6-9 and/or the obtained decoded images ID. The display screen can also be configured to show an indication that the input image II includes (or does not include) at least one anomaly.

The system S can also include a user interface to allow operators to examine the detected anomalies and provide feedback. In some cases, the system S can generate reports or analyses on the detected anomalies, potentially providing information for process improvement and quality control.

In some implementations, the system S can incorporate adaptive thresholding techniques to account for variations in lighting conditions or in the characteristics of the panels P. This can involve the dynamic adjustment of the anomaly detection parameters based on the specific characteristics of each batch of panels being processed.

The system S can also be extended to handle multimodal data inputs. In addition to visual inspection, it can incorporate data from other sensors such as ultrasound scanners or infrared cameras, potentially providing a more comprehensive assessment of the quality and integrity of the panels P.

Such a system S can comprise further electronic elements that can be provided, such as USB cables, power supply, and for the connection to the encoder/decoder.

With reference to figure 2, a computer-implemented method for training a predictive model 10 will now be described, to perform the detection of anomalies in worked wood panels P, such as for example sectioned panels.

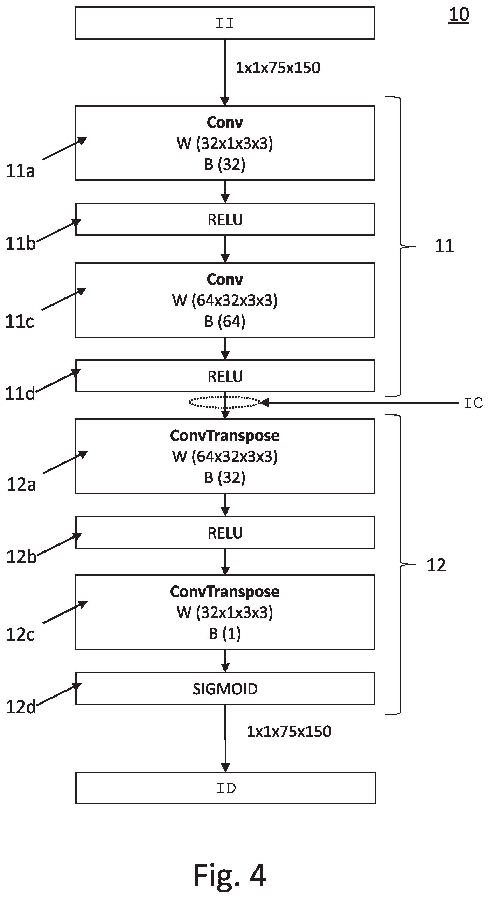

With reference to figure 4, this predictive model 10 includes an artificial neural network, preferably a convolutional neural network (CNN) for image processing composed of an encoding branch 11 or encoder followed by a decoding branch 12 or decoder, which can form a convolutional or alternatively variational autoencoder and can provide for a complementary structure between them.

The encoding branch 11 of the artificial neural network has the function of extracting the features from an input image II, while the decoding branch 12 has the function of, based on the features extracted from the input image II, reconstructing a decoded image ID of spatial dimensions corresponding to the input image II so as to be able to perform a comparison and the determination of a discrepancy value between the input image II and the decoded image ID.

In particular, the encoding branch 11 can comprise a first plurality of convolutional layers or layers 11a, 11c designed in series, each of which is followed by a first activation layer. The first activation layer can in turn comprise a Rectified Linear Unit (Relu) activation function.

Similarly, the decoding branch 12 can comprise a second plurality of convolutional layers 12a, 12c designed in series, each of which is followed by a respective second activation layer 12b, 12d.

The second activation layers can comprise both a sigmoid function 12d for the last convolutional layer 12c and a Relu function 12b for the remaining convolutional layers 12a of the decoding branch 12.

In such an architecture of the neural network, the second plurality of convolutional layers 12a, 12c of the decoding branch is preferably transposed with respect to the first plurality of convolutional layers 11a, 11c of the encoding branch 11.

With reference to figure 2, the computer-implemented method for training a predictive model 10 for the detection of anomalies in worked panels P provides for the following steps in sequence:
A1) providing to the predictive model 10 a series of input images II, each representing a worked side face of a wood panel P, obtained from a dataset, such as for example a dataset stored in the database 100.

The dataset can comprise compliant input images II, i.e., free from anomalies, which can be acquired directly from the cutting system S of wood panels P during its normal use, and non-compliant input images II, i.e., comprising at least one anomaly, preferably realized by artificially adding defects to compliant images (for example, by superimposing spots, patterns, and noise). Such images allow for training the predictive model 10.

The dataset in fact comprises images of worked panels P, for example sectioned P, of various types of materials, such as panels in particle board, MDF, plywood, or aluminum. The panels P shown in the images can have different finishes (for example, thin or thick laminates, light or dark colors) and thicknesses (for example, multilayer panels from 18 mm up to a maximum of 80 mm). In particular, in the training phase, the dataset can be formed of only compliant images and compliant images with artificially added defects, while in the validation phase of the predictive model 10, the dataset can be formed of compliant and/or defective (non-compliant) images, in order to also recognize the generation of artificial or real defects.

The method for detecting anomalies in worked panels P provides, following step A1, for each input image II, step B1 wherein the processor 200 receives a label indicating whether the input image II contains at least one anomaly.

In step C1 of the method, the processor uses the encoding branch 11 of the predictive model 10 to generate an encoded image IC with reduced spatial dimensions with respect to the input image II. In this phase, the extraction of an initial feature map from the input image II and its projection into said encoded image IC, which will have dimensions reduced with respect to the input image II, is further provided.

With reference to the architecture of the encoding and decoding branches 11, 12, the first plurality of convolutional layers 11a, 11c can comprise a 3x3 kernel configured to extract the initial feature map of step C1.

The initial feature map can also comprise a number of features between 32 and 64 from the input image II.

Therefore, in the case where the second plurality of convolutional layers 12a, 12c of the decoding branch 12 is transposed with respect to the first plurality of convolutional layers 11a, 11c of the encoding branch 11, or, the decoding branch being symmetric with respect to the encoding branch, the second plurality of convolutional layers 12a, 12c of the decoding branch 12 will present respectively 64 and 32 features.

However, it is quite evident to a person skilled in the art that the numbers of features can be varied, since the neural network reconstructs the original input image II anyway, therefore the invention should not be considered limited to the number of features reported in the description.

The number of convolutional layers 11a, 11c, 12a, 12c can also be increased independently of the accuracy of the predictive method 10, thus increasing the representative capacity of the network.

The method for training the predictive model 10 for the detection of anomalies in worked panels P further provides for step D1 wherein the processor 200, using the decoding branch 12, generates a decoded image ID that has the same dimensions (height, width) as the input image II.

In this phase, it is further provided to enrich the feature map coming from the encoded image IC and project it into the decoded image ID. In other words, the feature map coming from the encoded image IC is transferred into the space of the target image, which in this case is the decoded image ID.
Therefore, with specific reference to steps C1 and D1 of the training method, the projection of the initial feature map into the encoded image IC is implemented by the series of convolutional layers 11a, 11c which, through the application of kernels (for example, of 3x3 dimensions), transform the spatial data of the input II into a latent representation with reduced dimensionality.

Similarly, the generation of an enriched feature map and its projection into the decoded image ID occurs through the application of transposed convolutional layers 12a, 12c, which perform an upsampling operation of the latent data.

Therefore, in this context, the term 'enriched map' technically identifies the result of the expansion of the compressed feature vectors, where the information is spatially reconstructed to correspond to the original dimensions of the input image II. This structure allows the decoding branch 12 to generate a pixel-by-pixel comparable output ID with the original input, thus allowing the calculation of the discrepancy value necessary for the optimization of the model.

In step E1, the method calculates the discrepancy value between the input image II and the decoded image ID.

This discrepancy value calculated in step E1 can be calculated as the mean squared error between the input image II and the decoded image ID, such an error can be used to train the artificial neural network to reconstruct compliant decoded images ID.

In particular, said predetermined threshold can be calculated according to the following formula:$avg_loss + N * std_loss$wherein:
- avg_loss is equivalent to the mean value of the discrepancy value;
- N is equivalent to an integer; and
- std_loss is equivalent to the standard deviation value of the discrepancy value.

The predetermined threshold can also be an arbitrarily chosen value. The threshold can have a value of zero.

The method for training the predictive model 10 for the detection of anomalies in worked panels P further provides for step F1 wherein it compares the discrepancy value with a predetermined threshold.

In step G1, if the discrepancy value exceeds the predetermined threshold, the processor 200 propagates the discrepancy value in the predictive model 10 and provides again the input image II to the predictive model 10 to reduce the discrepancy value. In other words, since the predictive model 10 is already aware of the label, it will optimize its parameters taking into account the provided discrepancy value, or the difference between the determined discrepancy value and the predetermined threshold, so as to reduce the discrepancy value that will be obtained with the same input image II.

In addition, in step H1, if the discrepancy value does not exceed the predetermined threshold, the processor 200 can propagate the discrepancy value in the predictive model 10 and provide again the input image II to the predictive model 10 itself to increase the discrepancy value. In other words, since the predictive model 10 is already aware of the label, it will optimize its parameters taking into account the provided discrepancy value, or the difference between the determined discrepancy value and the predetermined threshold, so as to increase the discrepancy value that will be obtained with the same input image II.

Steps G1 and H1 can be performed in response to a determination that the label indicates that the input image is free from anomalies.

The predetermined threshold is defined using only compliant images II, therefore free from anomalies.

In this way, the predictive model 10 can self-train to reproduce decoded images ID without defects, based on compliant and/or non-compliant images.

Therefore, the predictive model 10 can be configured for backpropagation of the error. For example, the predictive model 10 can be configured to calculate how each parameter of the predictive model 10 contributes to the discrepancy value (or to the difference between the determined discrepancy value and the threshold), for example by calculating the gradient, which is a measure of how much the discrepancy changes with respect to each parameter of the predictive model. Once the gradients are calculated, the parameters of the predictive model 10 can be updated using an optimization/update algorithm.

The optimization/update process can continue until, in the case of input images II free of anomalies, the discrepancy value does not reach the predetermined threshold. Whereas, in the case where the input image II comprises at least one anomaly, the stopping condition can be configured to occur when the discrepancy value reaches the predetermined threshold.

In other words, the predictive model 10 is configured to perform backpropagation: it calculates the gradients of the discrepancy with respect to each parameter and updates these parameters by means of an optimization algorithm, iterating the process until the loss function stabilizes.

It is also possible, during the training phase, to replace the target image with a defect-free version, should the input image present defects. This reinforces the ability of the predictive model 10 to reconstruct compliant images, increasing the discrepancy between non-compliant input and reconstructed output. Therefore, further, in the training phase, the following steps can be provided:
E1*) determining a discrepancy value between a defective input image and a decoded image;
F1*) comparing the discrepancy value with a predetermined threshold;
H1*) in response to a determination that said discrepancy value does not reach a predetermined threshold, propagating the discrepancy value or a difference between the determined discrepancy value and the predetermined threshold in the predictive model and providing an input image free of defects (free from anomalies) to the predictive model so as to obtain an increased discrepancy value.

With reference to figure 3, a computer-implemented method for the detection of anomalies in worked panels P, object of the invention, is shown, using the trained predictive model 10.

The anomaly detection method comprises step A2, wherein the processor 200 provides to the predictive model 10 an input image II representing a worked side face of a wood panel P, for example a sectioned wood panel P.

In step B2 of the anomaly detection method, the processor 200, using the encoding branch 11 of the trained predictive model 10, generates an encoded image IC with reduced spatial dimensions with respect to the input image II. In this phase, the extraction of an initial feature map from the input image II and the projection of the initial map into the encoded image IC are included.

In step C2 of the anomaly detection method, the processor 200, using the decoding branch 12 of the trained predictive model 10, generates a decoded image ID that has the same dimensions as the input image II. In this phase, the initial feature map from the encoded image IC is enriched and projected into the decoded image ID.

In step D2, the discrepancy value between the input image II and the decoded image ID is calculated.

In step E2, the discrepancy value is compared with a predetermined threshold.

In step F2, if the discrepancy value is equal to or exceeds that of the predetermined threshold, a signal is provided indicating that the input image II contains at least one anomaly; conversely, in step G2, if the discrepancy value does not reach the predetermined threshold, the processor 200 provides a signal indicating that the input image II does not contain any anomaly.

The trained predictive model 10 thus shows a discrepancy value below the predetermined threshold value for compliant images, i.e., when it manages to reconstruct the input images II correctly, and a discrepancy value above the predetermined threshold value for non-compliant images, i.e., for images with defects, since the neural network is trained to reproduce the decoded images ID without defects.

With reference now to figures 6 - 9, example input images II of the method of figure 2 or 3 are shown, in particular:

Figure 6 shows an example input image II comprising a first ROI of a fine white particle board panel free from anomalies;

Figure 7 shows an example input image II comprising a second ROI of a fine white particle board panel comprising anomalies;

Figure 8 shows an example input image II comprising a third ROI of a fine white particle board panel comprising anomalies; and

Figure 9 shows an example input image II comprising a fourth ROI of a fine white particle board panel comprising anomalies.

The predictive model 10 described above has been evaluated in the validation phase and tested on various types of worked panels P, such as panels made of particle board, MDF, plywood, and aluminum.

To ensure the versatility of the predictive model 10, different finishes were considered, for example both thin and thick laminated panels, of different colors, such as for example light and dark colors, including for example white, gray, red, blue, and black.

The thicknesses of the tested P panels vary from configurations with a single panel up to four panels of standard thickness of 18 mm, reaching a maximum thickness of 80 mm.

The operating conditions during the cutting of the wood panel can directly influence the quality of the worked panel P and the risk of generating anomalies. In the validation phase, the cutting speed was variably set between 5 and 40 m/min to simulate realistic operating scenarios.

However, critical situations that favor the appearance of anomalies have been identified, for example the use of excessive speed, a pressure beam that is too high, or a poorly adjusted or absent scoring blade. A further risk element is represented by the possible presence of anomalous material between the panels, which can generate imperfections on the worked surface.

The processing of the input images II is provided by software that manages the acquisition and can operate both online and offline, sending the acquired input images II to the processing module.

From the acquired input images II, the ROIs can be identified automatically or manually. The ROIs allow for concentrating the analysis of the predictive model 10 on the relevant areas of the worked wood panels P.

The predictive model 10 can provide detailed feedback through visual maps of anomalies and global numerical values, with the possibility of directly adjusting the tolerance thresholds based on the client's needs. In some cases, the cutting unit 301 can be configured to automatically adjust the cutting parameters based on the feedback from the anomaly detection method, potentially optimizing the cutting process to minimize defects. For example, the cutting unit can be configured to automatically adjust the cutting parameters as a function of the number of input images II that include at least one anomaly, and/or as a function of the result of the comparison between the discrepancy value and the predetermined threshold. In terms of quality level regulation, the method can offer customizable control, implementing three adjustable predetermined thresholds: a global threshold, a local threshold, and a maximum number of tolerable anomalous ROIs. Thus, a worked panel P can be considered compliant if the global score and the number of anomalies respect the set parameters.

During the validation phase, the predictive model 10 allowed for obtaining a level of accuracy in anomaly recognition in a worked panel P, such as to be able to support operators of a cutting system in the evaluation phase of the state of the processing of a worked wood panel P, although with differences in accuracy based on the type of panel.

For example, for thin white P panels in particle board (such as those in figures 6 - 9), the predictive model 10 can achieve an accuracy of 97.4%, analyzing a sample of 3600 input images II, with a false positive rate of 20% and a false negative rate of 80% of the total errors.

For thick white P panels in MDF, the accuracy of the predictive model 10 reached was 93.8% on a sample of 465 images, with a false positive and negative rate respectively equal to 15% and 85% of the total errors.

Finally, for thick red P panels in MDF, the predictive model 10 obtained an accuracy of 95.2% on 367 images, with a false positive rate of 22% and a false negative rate of 78% of the total errors.

The performance of the predictive model 10 for detecting anomalies in worked panels P can be influenced by the limited amount of training data.

False positives, i.e., the erroneous classifications of compliant P panels as non-compliant, are mainly caused by the poor representation of some input images II in the training database.

False negatives, on the other hand, are attributable to defects located at the limit of the predetermined acceptability threshold, making it difficult for the model to discriminate them correctly.

The predictive model 10 according to the invention has demonstrated a consistent ability to identify ROIs with anomalous characteristics, contributing significantly to the quality control of worked wood panels P.

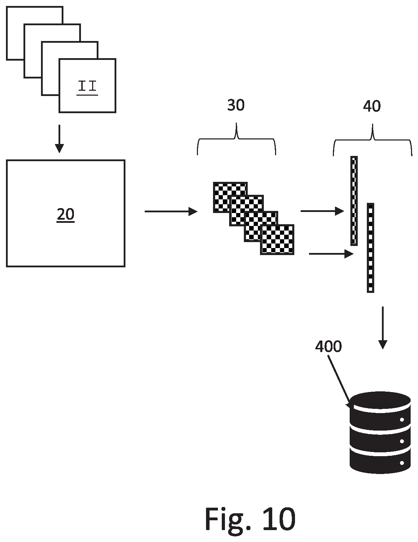

With continuous reference to figures 1-9, figure 10 illustrates a diagram of a method for training a predictive model for the detection of anomalies, according to a first non-claimed illustrative example. The same numerical references indicate the same parts, elements, or components, or corresponding parts, already illustrated and described previously, and which therefore will not be described again.

The method is based on the use of a predictive model 20, which can be configured to analyze input images of worked panels P. The predictive model 20 can comprise a pre-trained artificial neural network for detecting anomalies in generic images. The pre-trained artificial neural network can include a convolutional neural network (CNN). In some implementations, the CNN can be a ResNet or a MobileNet.

The method allows for obtaining local blocks 30, which can represent segmented portions of the input images. These local blocks 30 can be processed by the predictive model 20 to extract distinctive features.

A subset of vectors 40 can be generated from the features extracted from the local blocks 30. This subset of vectors 40 can contain a reduced number of features compared to the full set of extracted features, potentially improving computational efficiency while maintaining representative information.

The storage unit 400 can be used to store the subset of vectors 40. This stored information can be used in subsequent anomaly detection processes.

In operation, the predictive model 20 can receive input images of worked panels P. These images can be segmented into local blocks 30, from which distinctive features are extracted. Through the described method, it is therefore possible to generate a subset of vectors 40 based on these features. This subset of vectors 40 can then be stored in the storage unit 400 for subsequent use in anomaly detection tasks.

The training method for the predictive model 20 can be implemented as illustrated in figure 11.

In step A3 of the method, a plurality of input images II of worked panels P is provided to the predictive model 20. Each input image II can comprise a compliant image of a worked side face of a panel. Therefore, the method does not require non-compliant images for training.

Subsequently, in step B3, the segmentation of the compliant input image into a plurality of local blocks 30 (so-called "patches") occurs. Each of the generated local blocks 30 is adjacent to at least one of the remaining blocks of the plurality of local blocks 30, so as to obtain a mosaic of blocks 30.

In some cases, the segmentation of the input image II into local blocks 30 can be performed using internal layers of the pre-trained artificial neural network of the predictive model 20, obtaining more generic descriptive features. The segmentation can involve the application of a kernel of predetermined dimensions to the input image II.

Being the local blocks 30 locally correlated, as they are adjacent to each other in the image, this adjacency allows the kernel to maintain a spatial continuity during processing, preserving the correlation between each block and the adjacent blocks.

Each block can have a spatial coverage that depends on the architecture of the CNN network and a number of features equal to those of the layers of the pre-trained CNN network. In particular, the dimensions of a local block can be determined based on at least one parameter among: a depth of the pre-trained artificial neural network, a step, and a margin.

The method can then proceed with step C3, which comprises the extraction of a distinctive feature map for each of the plurality of local blocks 30 and the generation of a feature vector comprising the extracted feature map. Step C3 is performed for each of the local blocks 30.

In step D3, the selection of a subset of vectors 40 representative of a dataset comprising the plurality of feature vectors is performed. The subset of vectors 40 comprises a lower number of features compared to the dataset. In some cases, the dataset can be generated by concatenating the feature vectors of the respective blocks of the plurality of local blocks 30.

The method can conclude with step E3, wherein the subset of vectors 40 is stored in the storage unit 400 to be used in subsequent anomaly detection processes.

Steps C3-E3 can be performed for each of the plurality of compliant input images II.

Through this training method, the predictive model 20 can be trained to efficiently process the input images II, extract relevant features, and generate a condensed representation of these features for efficient anomaly detection in worked panels P.

The anomaly detection method will now be described with reference to figure 12. Figure 12 represents a flowchart of a computer-implemented method for detecting anomalies in worked panels using the pre-trained predictive model 20 according to the method described previously.

The detection method comprises step A4, which involves providing an input image II of worked panels to the predictive model 20. The input image II can comprise an image of a worked side face of a corresponding panel P.

Subsequently, in step B4, the input image is segmented into a plurality of local blocks 30. Each of the local blocks 30 can be adjacent to at least one of the remaining blocks of the plurality of local blocks 30.

The method can then proceed with step C4, wherein the extraction of a distinctive feature map for each of the plurality of local blocks 30 and the generation of a feature vector comprising the extracted feature map occurs. This step is performed for each of the local blocks 30.

In step D4, a distance in an n-dimensional space is calculated between the feature vector associated with each of the local blocks 30 and a selected feature vector from the subset of vectors 40 stored in the storage unit 400. The selected vector can be the closest to the feature vector of the local block 30 under analysis. This distance represents the anomaly index of the single local block 30. Considering the anomaly index of each of the local blocks 30, a global map of the anomalies can be obtained.

The method proceeds with step E4, which involves comparing the calculated distance with a predetermined distance threshold.

In response to a determination that the distance reaches the predetermined distance threshold, the method proceeds with step F4 by providing a signal indicating that the local block 30 includes at least one anomaly.

Conversely, in response to a determination that the distance does not reach the predetermined distance threshold, the method proceeds with step G4 by providing a signal indicating that the local block 30 does not include at least one anomaly.

In some cases, the method can involve calculating a new predetermined distance threshold based on the calculated distances. This new threshold can be used to refine the anomaly detection process.

The method can also include the re-execution of steps A4-G4 for a new input image II of worked panels P, applying the new predetermined distance threshold, allowing a continuous improvement of the accuracy of the anomaly detection.

Through the detection method described above, the predictive model 20 can effectively analyze the input images II, compare them with the stored subset of vectors 40, and identify anomalies based on distance calculations and thresholds. This method can provide a robust approach for detecting anomalies in worked panels P.

The anomaly detection method can be implemented in various real-world scenarios, particularly in production processes involving worked panels P. In some cases, the method can be integrated with a system S for cutting wood panels into sectioned wood panels P, as reported with reference to figure 1, to provide quality control and real-time anomaly detection capabilities.

This integration can allow for the immediate inspection of the just-cut panels, potentially reducing waste and improving the overall efficiency of production. The cutting unit can be configured to automatically adjust the cutting parameters based on the feedback from the anomaly detection method, potentially optimizing the cutting process to minimize defects. For example, the cutting unit can be configured to automatically adjust the cutting parameters as a function of the number of local blocks 30 that include at least one anomaly.

The anomaly detection methods described above can be adapted for different types of worked panels P or industrial applications. For example, in the case of wood panels, the system S can be calibrated to detect specific types of defects such as knots, cracks, or discolorations. In other applications, such as the production of metal or plastic panels, the system S can be adjusted to identify different types of anomalies relevant to those materials.

The present description may relate to one or more of the following numbered clauses:
1. A computer-implemented method for training a predictive model (20) for the detection of anomalies in worked panels (P), said predictive model (20) comprising a pre-trained artificial neural network for the detection of anomalies in generic images, the method comprising the following steps:
   A3) providing to said predictive model (20) a plurality of input images (II) of worked panels (P) from a dataset, each input image (II) comprising a compliant image of a worked side face of a corresponding panel (P); for each of said plurality of compliant input images (II):
   B3) segmenting the compliant input image (II) into a plurality of local blocks (30), each block being adjacent to at least one of the remaining blocks of said plurality of blocks;
   C3) for each of said plurality of blocks, extracting a representative feature map of said block and generating a feature vector comprising said feature map;
   D3) selecting a subset of vectors (40) representative of a dataset comprising said plurality of feature vectors, wherein said subset of vectors (40) comprises a lower number of features with respect to said dataset;
   E3) storing said subset of vectors (40) in a storage unit (400).
2. The method according to the preceding clause, wherein step B3 comprises segmenting using internal layers of said pre-trained artificial neural network.
3. The method according to any of the preceding clauses, comprising generating said dataset by concatenating said feature vectors of said respective plurality of blocks (30).
4. The method according to any of the preceding clauses, wherein step B3 comprises applying a kernel of predetermined dimensions.
5. The method according to any of the preceding clauses, wherein said pre-trained artificial neural network comprises a convolutional neural network, CNN, preferably wherein said CNN comprises a ResNet network, or a MobileNet network.
6. A computer-implemented method for the detection of anomalies in worked panels (P) by means of a pre-trained predictive model (20) according to any of clauses 1 - 5, said method comprising the following steps:
   A4) providing to said predictive model (20) an input image (II) of worked panels (P), said input image (II) comprising an image of a worked side face of a corresponding panel (P);
   B4) segmenting the input image (II) into a plurality of local blocks, each block being adjacent to at least one of the remaining blocks of said plurality of blocks;
   C4) for each of said plurality of blocks, extracting a representative feature map of said block and generating a feature vector comprising said feature map;
   D4) for each of said plurality of blocks, calculating a distance in an n-dimensional space between said feature vector associated with said block and a selected feature vector from said subset of vectors (40), said selected vector being the closest to said feature vector;
   E4) comparing said distance with a predetermined distance threshold;
   F4) in response to a determination that the distance reaches said distance threshold, providing a signal indicating that said block includes at least one anomaly; and
   G4) in response to a determination that said distance does not reach said predetermined distance threshold, providing a signal indicating that said block does not include at least one anomaly.
7. The method according to the preceding clause, comprising:
   calculating a new predetermined distance threshold based on the calculated distances;
   performing again steps A4-G4 for a new input image (II) of worked panels (P), applying said new predetermined distance threshold.
8. A system (S) for cutting wood panels into sectioned wood panels (P) and for the detection of anomalies in said sectioned panels (P), said system (S) comprising:
   a machine tool (300) comprising:
   a cutting unit (301) for cutting said wood panels into sectioned wood panels (P), and
   at least one acquisition device (302) for acquiring an input image (II) of a sectioned wood panel (P); and
   at least one processor (200) communicatively coupled to said at least one acquisition device (302) and configured to perform the method according to clause 7.
9. A computer program product comprising instructions which, when the program is executed by a processor, cause the processor to perform the method of any of clauses 1 - 7.
10. A computer-readable medium on which the computer program product of clause 9 is stored.

An advantage of the described anomaly detection methods is that they allow for an automated, faster, and more precise verification, which reduces the dependence on the operator and improves safety and efficiency for the detection of anomalies/defects as the processing (e.g., sectioning, edging) of the panel proceeds.

A further advantage is the fact that the training and detection methods can be easily implemented by a computer.

The present invention has been described by way of illustration, but not of limitation, according to its preferred embodiments, but it is to be understood that variations and/or modifications may be made by those skilled in the art without thereby departing from the relative scope of protection, as defined by the appended claims.

## Claims

1. A computer-implemented method for training a predictive model (10) for detecting anomalies in worked panels (P), said predictive model (10) comprising an artificial neural network, comprising an encoding branch (11)and a decoding branch (12), the method comprising the following steps:
A1) providing to said predictive model (10) a plurality of input images (II) of worked panels (P) from a dataset, each input image (II) comprising an image of a worked side face of a corresponding panel (P);
for each of said plurality of input images (II):
B1) receiving a label indicating whether said input image (II) includes at least one anomaly;
C1) generating, by using said encoding branch (11), at least one encoded image (IC) having reduced spatial dimensions with respect to said input image, wherein step C1 comprises extracting at least an initial feature map representative of said input image (II) and projecting said at least one initial feature map into said at least one corresponding encoded image (IC);
D1) generating, by using said decoding branch (11), a decoded image (ID) having spatial dimensions corresponding to said input image (II), wherein step D1 comprises generating an enriched feature map from said at least one encoded image (IC) and projecting said enriched feature map into said decoded image (ID);
E1) determining a discrepancy value between said input image (II) and said decoded image (ID);
F1) comparing said discrepancy value with a predetermined threshold;
G1) in response to a determination that said label indicates that the input image (II) **is free from anomalies** and that said discrepancy value **reaches** said predetermined threshold, propagating said discrepancy value or a difference between the determined discrepancy value and said predetermined threshold in said predictive model (10) and providing again said input image (II) to said predictive model (10) so as to obtain a reduced discrepancy value; and
H1*) in response to a determination that said label indicates that the input image (II) comprises **at least one anomaly** and that said discrepancy value **does not reach** a predetermined threshold, propagating the discrepancy value or a difference between the determined discrepancy value and the predetermined threshold in the predictive model and providing a version of the input image free from anomalies to the predictive model so as to obtain an increased discrepancy value.

2. The method according to the preceding claim, wherein said encoding branch (11) and said decoding branch (12) form a convolutional or variational autoencoder.

3. The method according to any one of the preceding claims, wherein said encoding branch (11) and said decoding branch (12) have a complementary structure to each other.

4. The method according to any one of the preceding claims, wherein said encoding branch (11) comprises
a first plurality of convolutional layers (11a, 11c) in series, each followed by a first activation layer, said first activation layer comprising a Rectified Linear Unit, Relu, activation function.

5. The method according to any one of the preceding claims, wherein said decoding branch (12) comprises
a second plurality of convolutional layers (12a, 12c) in series, each followed by a second activation layer (12b, 12d).

6. The method according to the preceding claim, wherein said second plurality of convolutional layers is transposed with respect to the first plurality of convolutional layers (11a, 11c) of the encoding branch 11.

7. The method according to the preceding claim, wherein said second activation layer comprises:
a sigmoid function (12d) for the last convolutional layer and a Relu function (12b) for each remaining convolutional layer of said second plurality of convolutional layers.

8. The method according to any one of claims 4-7, wherein one of said first plurality of convolutional layers comprises
a 3x3 kernel, configured to extract said initial feature map comprising a number of features between 32 and 64 from the input image (II).

9. The method according to any one of the preceding claims, wherein said dataset comprises input images (II) free from anomalies and input images (II) comprising at least one anomaly.

10. The method according to any one of the preceding claims, wherein said discrepancy value is calculated as mean squared error between said input image (II) and said decoded image (ID).

11. The method according to any one of the preceding claims, wherein said predetermined threshold value is equivalent to: $avg_loss + N * std_loss$ wherein:
- avg_loss is equivalent to the mean value of said discrepancy value;
- N is equivalent to an integer; and
- std_loss is equivalent to the standard deviation value of said discrepancy value.

12. The method according to any one of the preceding claims, wherein said artificial neural network is a convolutional neural network, CNN.

13. The method according to any one of the preceding claims, comprising the step:
H1) in response to a determination that said label indicates that the input image (II) is free from anomalies and that said discrepancy value does not reach said predetermined threshold, propagating said discrepancy value or a difference between the determined discrepancy value and said predetermined threshold in said predictive model (10) and providing again said input image (II) or an input image free of defects to said predictive model (10) so as to obtain an increased discrepancy value.

14. A computer-implemented method for detecting anomalies in worked panels (P) by means of a predictive model (10) trained according to any one of claims 1 - 13, said method comprising the following steps:
A2) providing to said predictive model (10) an input image (II) of worked panels (P), said input image (II) comprising an image of a worked side face of a corresponding panel (P);
B2) generating, by using said encoding branch (11) of said trained predictive model (10), at least one encoded image (IC) having reduced spatial dimensions with respect to said input image, wherein step B2 comprises extracting at least an initial feature map representative of said input image (II) and projecting said at least one initial feature map into said at least one corresponding encoded image (IC);
C2) generating, by using said decoding branch (11) of said trained predictive model (10), a decoded image (ID) having spatial dimensions corresponding to said input image (II), wherein step C2 comprises generating an enriched feature map from said encoded image (IC) and projecting said enriched feature map into said decoded image (ID);
D2) determining a discrepancy value between said input image (II) and said decoded image (ID);
E2) comparing said discrepancy value with a predetermined threshold;
F2) in response to a determination that said discrepancy value **reaches** said predetermined threshold, providing a signal indicating that said input image (II) includes at least one anomaly; and
G2) in response to a determination that said discrepancy value **does not reach** said predetermined threshold, providing a signal indicating that said input image (II) does not include at least one anomaly.

15. A system (S) for cutting wood panels into sectioned wood panels (P) and for detecting anomalies in said sectioned panels (P), said system (S) comprising:
a machine tool (300) comprising:
a cutting unit (301) for cutting said wood panels into sectioned wood panels (P), and at least one acquisition device (302) for acquiring an input image (II) of a sectioned wood panel (P); and
at least one processor (200) communicatively coupled to said at least one acquisition device (302) and configured to perform the method according to any one of claims 1-14.

16. A system for edging wood panels into edged wood panels and for detecting anomalies in said edged panels, said system comprising:
a machine tool comprising:
an edging unit for edging said wood panels into edged wood panels, and at least one acquisition device for acquiring an input image of an edged wood panel; and at least one processor communicatively coupled to said at least one acquisition device and configured to perform the computer-implemented method according to any one of claims 1-14.

17. A computer program product comprising instructions which, when the program is executed by a processor, cause the processor to perform the method of any one of claims 1 - 14.

18. A computer-readable medium on which the computer program product of claim 17 is stored.
